# EUROPÄISCHE PATENTSCHRIFT

(11) **EP 3 946 990 B1**
(45) Veröffentlichungstag und Bekanntmachung des Hinweises auf die Patenterteilung: **28.06.2023**
(21) Anmeldenummer: 20725446.7
(22) Anmeldetag: 04.05.2020
(51) Int. Cl.: B60H 1/22, B60H 1/00, B60N 3/04, B60R 13/02, B60R 3/02, B61D 19/02, B61D 27/00, B61D 23/00

(54) **PASSAGIERFAHRZEUG MIT EINER VORRICHTUNG ZUM BEHEIZEN VON ZUMINDEST EINER STUFE EINES EINSTIEGSBEREICHS DES PASSAGIERFAHRZEUGS**
PASSENGER VEHICLE WITH A DEVICE FOR HEATING AT LEAST ONE STEP OF AN ENTRY REGION OF THE VEHICLE
VÉHICULE DE TRANSPORT DE PASSAGERS AVEC UN DISPOSITIF APTE À CHAUFFER AU MOINS UNE MARCHE D'UNE ZONE D'ENTRÉE DU VÉHICULE

(30) Priorität: 29.05.2019 DE 102019207923
(43) Veröffentlichungstag der Anmeldung: 09.02.2022
(73) Patentinhaber: Siemens Mobility GmbH, 81739 München (DE)
(72) Erfinder: HILDEBRANDT, Alexander, 44789 Bochum (DE); KASAP, Irfan, 44653 Herne (DE); SCHMITZ, Markus, 52379 Langerwehe (DE)
(74) Vertreter: Siemens Patent Attorneys
(86) Internationale Anmeldenummer: PCT/EP2020/062244
(87) Internationale Veröffentlichungsnummer: WO 2020/239360

(56) Entgegenhaltungen:
- EP-A1- 2 433 897
- JP-U- H0 623 862
- US-A1- 2009 033 058
- US-B1- 9 802 545

## Beschreibung

Die Erfindung betrifft ein Passagierfahrzeug mit einem Einstiegsbereich für Passagiere, wobei der Einstiegsbereich zumindest eine Stufe aufweist, und einem Infrarotheizstrahler, welcher im Einstiegsbereich des Passagierfahrzeugs derart angeordnet ist, dass der Infrarotheizstrahler in seinem aktivierten Zustand zumindest einen Teil der zumindest einen Stufe mit Infrarotstrahlung bestrahlt.

Ein solches Passagierfahrzeug ist beispielsweise in der JP H06 23862 U offenbart. In der US 2009/033058 A1 wird warme Luft auf mehrere Stufen geblasen.

Bei Frost kann sich auf den Stufen im Einstiegsbereich eines Passagierfahrzeugs, beispielsweise eines Schienenfahrzeugs oder eines Buses, Schnee ablagern und/oder Eis bilden. Insbesondere einsteigende Passagiere können Schnee, Eis und/oder Feuchtigkeit in den Einstiegsbereich eintragen.

Schnee und/oder Eis auf den Stufen des Einstiegsbereichs kann zu gefährlichen Situationen für ein- und/oder aussteigende Passagiere führen.

Um eine Schneeablagerung und eine Eisbildung im Einstiegsbereich zu vermeiden, wird oftmals warme Luft in den Einstiegsbereich geblasen. Jedoch steigt warme Luft durch die Thermik nach oben, sodass die Stufen im Einstiegsbereich auf diesem Wege nur sehr ineffektiv beheizt werden können. Undichtigkeiten der Tür können zusätzlich dafür sorgen, dass die Stufen im Einstiegsbereich bei der Fahrt mit kalter Luft umspült werden, was eine Eisbildung fördert.

Eine Aufgabe der Erfindung ist es, ein Passagierfahrzeug bereitzustellen, bei welchem eine Schnee- und Eisfreihaltung der Stufe(n) im Einstiegsbereich verbessert ist.

Die Aufgabe wird gelöst durch ein Passagierfahrzeug der eingangs genannten Art, bei dem erfindungsgemäß der Einstiegsbereich zumindest eine erste Stufe und eine zweite Stufe umfasst, wobei die erste Stufe unterhalb der zweiten Stufe angeordnet ist, wobei die zweite Stufe eine Trittfläche und eine zur Trittfläche winklig angeordnete Steigfläche aufweist, wobei der Infrarotheizstrahler an der Steigfläche der zweiten Stufe angeordnet ist.

Auf diese Weise kann der bestrahlte Teil der Stufe aufgrund der vom Infrarotheizstrahler abgegebenen Infrarotstrahlung, auch Wärmestrahlung genannt, erwärmt, d. h. beheizt, werden.

Insbesondere kann die vom Infrarotheizstrahler bestrahlte Fläche erwärmt/beheizt werden. Auf diese Weise kann der Infrarotheizstrahler als Strahlungsheizung verwendet/eingesetzt werden.

Durch die Verwendung des Infrarotheizstrahlers kann ein Wärmeverlust durch Konvektion, insbesondere durch Thermik, reduziert werden.

Auf diese Weise kann eine effiziente Beheizung der zumindest einen Stufe im Eingangsbereich des Passagierfahrzeugs erreicht werden.

Weiter kann auf diese Weise die Schnee- und Eisfreihaltung der zumindest einen Stufe im Einstiegsbereich verbessert werden.

Der Infrarotheizstrahler weist einen aktivierten Zustand auf. Zweckmäßigerweise strahlt der Infrarotheizstrahler in seinem aktivierten Zustand Infrarotstrahlung aus. Mit anderen Worten: Der Infrarotheizstrahler gibt zweckmäßigerweise in seinem aktivierten Zustand Infrarotstrahlung ab.

Ferner kann der Infrarotheizstrahler einen deaktiven Zustand aufweisen. Zweckmäßigerweise strahlt der Infrarotheizstrahler in seinem deaktiven Zustand keine Strahlung aus.

Die Stufe des Eingangsbereichs kann als eine beliebige Stufe ausgeführt sein. Die Stufe kann beispielsweise als eine Austrittsstufe ausgeführt sein. An die Austrittsstufe kann sich ein Podest des Einstiegsbereichs anschließen. Ferner kann die Stufe als eine andere Stufe ausgeführt sein.

Vorzugsweise ist der Infrarotheizstrahler flächig ausgebildet. Das heißt, dass der Infrarotheizstrahler vorzugsweise als Flächenstrahler ausgebildet sein kann.

Ein flächig ausgebildeter Infrarotheizstrahler hat den Vorteil, dass er zweckmäßigerweise eine geringere Bauhöhe aufweist und/oder weniger Bauraum verbraucht als ein als Röhrenstrahler ausgebildeter Infrarotheizstrahler. Weiter erreicht ein flächig ausgebildeter Infrarotheizstrahler zweckmäßigerweise geringere Oberflächentemperaturen als ein als Röhrenstrahler ausgebildeter Infrarotheizstrahler. Auf diese Weise kann bei der Verwendung eines flächig ausgebildeten Infrarotheizstrahlers eine Verletzungsgefahr aufgrund heißer Oberflächen reduziert, insbesondere vermieden, werden.

Beispielsweise kann der flächig ausgebildete Infrarotheizstrahler als Glas-Infrarotheizstrahler, als Stein-Infrarotheizstrahler oder anderweitig ausgeführt sein.

Prinzipiell könnte der Infrarotheizstrahler auch als Röhrenstrahler ausgebildet sein.

Es ist zweckmäßig, wenn die Stufe eine Trittfläche aufweist.

Das Passagierfahrzeug kann beispielsweise als Schienenfahrzeug ausgebildet sein.

Weiter kann das Passagierfahrzeug beispielsweise als Bus ausgebildet sein.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung.

### Es zeigen:

- FIG 1: einen Ausschnitt eines Passagierfahrzeugs mit einem Einstiegsbereich und mit im Einstiegsbereich angeordneten Infrarotheizstrahlern und
- FIG 2: einen Ausschnitt eines anderen, nicht zu der Erfindung gehörenden Passagierfahrzeugs mit einem Einstiegsbereich und mit im Einstiegsbereich angeordneten Infrarotheizstrahlern.

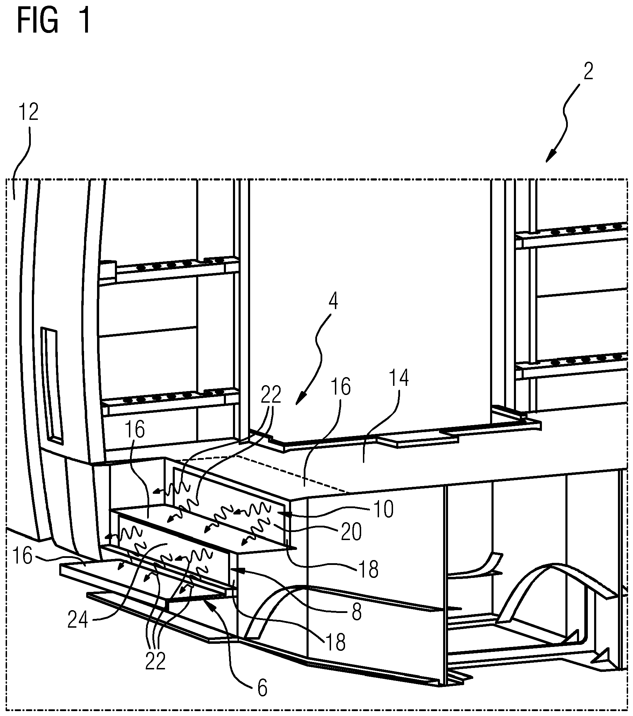

FIG 1 zeigt schematisch einen Ausschnitt eines als Schienenfahrzeug ausgebildeten Passagierfahrzeugs 2. Prinzipiell könnte das Passagierfahrzeug 2 aber auch anders ausgebildet sein, beispielsweise als Bus.

Das Passagierfahrzeug 2 umfasst einen Einstiegsbereich 4 für Passagiere.

Der Einstiegsbereich 4 weist eine untere Stufe 6, eine mittlere Stufe 8 und eine obere Stufe 10 auf.

Außerdem weist das Passagierfahrzeug 2 eine Tür 12 auf, die im geschlossenen Zustand den Einstiegsbereich 4 nach außen hin begrenzt. In FIG 1 befindet sich die Tür 12 in ihrem geöffneten Zustand.

Die untere Stufe 6 ist als Antrittsstufe ausgeführt. In diesem Beispiel ist die untere Stufe 6 ein- und ausfahrbar. Bei geöffneter Tür befindet sich die untere Stufe 6 in ihrem ausgefahrenen Zustand (wie in FIG 1 gezeigt). Bei geschlossener Tür befindet sich die untere Stufe 6 in ihrem eingefahrenen Zustand (nicht gezeigt).

Die untere Stufe 6 ist unterhalb der mittleren Stufe 8 angeordnet. Außerdem ist die mittlere Stufe 8 unterhalb der oberen Stufe 10 angeordnet.

Die obere Stufe 10 ist als eine Austrittsstufe ausgeführt. An die obere Stufe 10 schließt sich ein Podest 14 des Einstiegsbereichs 4 an.

Die obere Stufe 10 weist eine Trittfläche 16 und eine zur Trittfläche 16 winklig, hier rechtwinklig, angeordnete Steigfläche 18 auf. Die Trittfläche 16 der oberen Stufe 10 und das Podest 14 bilden eine gemeinsame, ebene Fläche.

Auch die mittlere Stufe 8 weist eine Trittfläche 16 und eine zur Trittfläche 16 winklig, hier rechtwinklig, angeordnete Steigfläche 18 auf.

Die jeweilige Steigfläche 18 kann auch in einem anderen Winkel zu der jeweiligen Trittfläche 16 stehen. Beispielsweise kann die jeweilige Steigfläche 18 auch spitzwinklig zu der jeweiligen Trittfläche 16 stehen, insbesondere wenn die Stufe eine Unterschneidung aufweist.

Das Passagierfahrzeug 2 weist einen ersten Infrarotheizstrahler 20 auf, der im Einstiegsbereich 4 des Passagierfahrzeugs 2 angeordnet ist. Der erste Infrarotheizstrahler 20 ist an der Steigfläche 18 der oberen Stufe 10 angeordnet.

Der erste Infrarotheizstrahler 20 ist aktivierbar. In seinem aktivierten Zustand strahlt der erste Infrarotheizstrahler 20 Infrarotstrahlung 22 aus.

Der erste Infrarotheizstrahler 20 bestrahlt in seinem aktivierten Zustand die Trittfläche 16 der mittleren Stufe 8 mit Infrarotstrahlung 22.

Auf diese Weise erwärmt die vom ersten Infrarotheizstrahler 20 ausgestrahlte Infrarotstrahlung 22 die Trittfläche 16 der mittleren Stufe 8.

Das Passagierfahrzeug 2 weist außerdem einen zweiten Infrarotheizstrahler 24 auf, der im Einstiegsbereich 4 des Passagierfahrzeugs 2 angeordnet ist. Der zweite Infrarotheizstrahler 24 ist an der Steigfläche 18 der mittleren Stufe 8 angeordnet.

Der zweite Infrarotheizstrahler 24 ist aktivierbar. In seinem aktivierten Zustand strahlt der zweite Infrarotheizstrahler 24 ebenfalls Infrarotstrahlung 22 aus.

Wenn die untere Stufe 6 ausgefahren ist und der zweite Infrarotheizstrahler 24 aktiviert ist, dann bestrahlt der zweite Infrarotheizstrahler 24 die Trittfläche 16 der unteren Stufe 6 mit Infrarotstrahlung 22.

Auf diese Weise erwärmt die vom zweiten Infrarotheizstrahler 24 ausgestrahlte Infrarotstrahlung 22 die Trittfläche 16 der unteren Stufe 6.

Da die Trittflächen 16 der unteren und der mittleren Stufe 6, 8 mittels Infrarotstrahlung 22 erwärmt werden, kann ein Wärmeverlust durch Konvektion reduziert werden. Außerdem kann auf eine ineffiziente Wärmeübertragung über die Luft verzichtet werden. Aufgrund der Erwärmung der Trittstufen 16 der unteren und der mittleren Stufe 6, 8 mittels Infrarotstrahlung 22 kann außerdem eine unnötige Erwärmung anderer Komponenten, insbesondere eine unnötige Erwärmung des Rohbaus, gering gehalten werden.

Die Infrarotheizstrahler 20, 24 sind jeweils flächig, d. h. als Flächenstrahler, ausgebildet. Auf diese Weise benötigen die Infrarotheizstrahler 20, 24 wenig Bauraum. Insbesondere können die Infrarotheizstrahler 20, 24 auf diese Weise auch nachgerüstet werden.

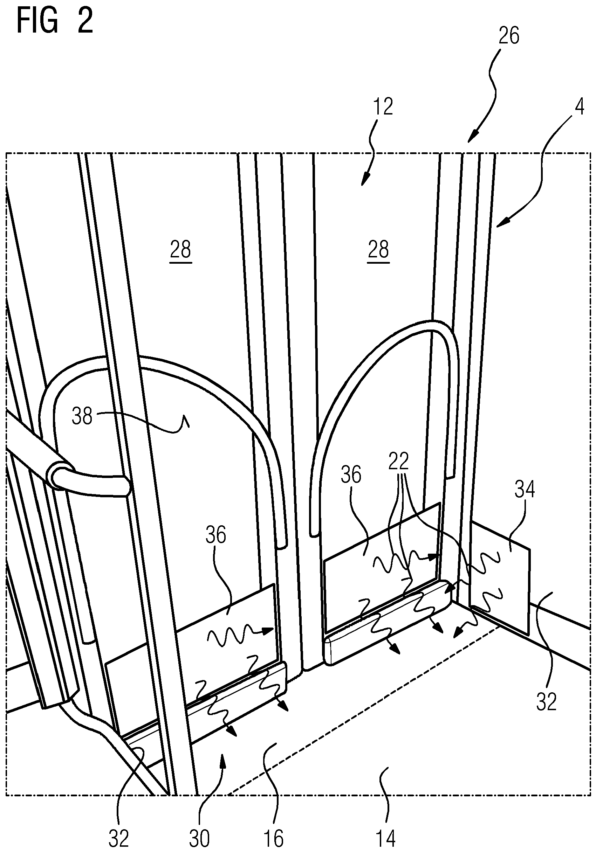

FIG 2 zeigt schematisch einen Ausschnitt eines als Bus ausgebildeten Passagierfahrzeugs 26. Prinzipiell könnte das Passagierfahrzeug 26 aber auch anders ausgebildet sein, beispielsweise als Schienenfahrzeug.

Die nachfolgende Beschreibung beschränkt sich im Wesentlichen auf die Unterschiede zum Ausführungsbeispiel aus FIG 1, auf das bezüglich gleich bleibender Merkmale und Funktionen verwiesen wird. Im Wesentlichen gleich bleibende Elemente werden grundsätzlich mit den gleichen Bezugszeichen bezeichnet und nicht erwähnte Merkmale sind in das folgende Ausführungsbeispiel übernommen, ohne dass sie erneut beschrieben sind.

Die Tür 12 des Passagierfahrzeugs 26 ist in FIG 2 in ihrem geschlossenen Zustand dargestellt, in welchem sie den Einstiegsbereich 4 nach außen hin begrenzt.

In diesem Beispiel weist die Tür 12 zwei Flügel 28 auf. Prinzipiell könnte die Tür 12 aber auch einflüglig sein.

Der Einstiegsbereich 4 weist eine Stufe 30 auf. Die Stufe 30 ist als eine Austrittsstufe ausgeführt, an welche sich ein Podest 14 des Einstiegsbereichs 4 anschließt.

Die Stufe 30 weist eine Trittfläche 16 auf.

Seitlich der Stufe 30 ist eine zur Trittfläche 16 winklig, hier rechtwinklig, angeordnete Seitenfläche 32 angeordnet. Die Seitenfläche 32 steht hier senkrecht zu der Trittfläche 16.

Die Seitenfläche 32 ist im Einstiegsbereich 4 angeordnet und begrenzt den Einstiegsbereich 4 seitlich.

Das Passagierfahrzeug 26 weist einen ersten Infrarotheizstrahler 34 auf, der im Einstiegsbereich 4 des Passagierfahrzeugs 26 angeordnet ist. Der erste Infrarotheizstrahler 34 ist an der Seitenfläche 32 angeordnet.

Der erste Infrarotheizstrahler 34 bestrahlt in seinem aktivierten Zustand einen Teil der Trittfläche 16 der Stufe 30 mit Infrarotstrahlung 22.

Auf diese Weise erwärmt die vom ersten Infrarotheizstrahler 34 ausgestrahlte Infrarotstrahlung 22 den bestrahlten Teil der Stufe 30.

Gegenüber der Seitenfläche 32 ist eine weitere Seitenfläche 32 angeordnet. Wie weitere Seitenfläche 32 ist ebenfalls seitlich der Stufe 30 winklig, hier rechtwinklig, zur Trittfläche 16 angeordnet.

Das Passagierfahrzeug 26 kann einen weiteren ersten Infrarotheizstrahler 34 aufweisen. Der weitere erste Infrarotheizstrahler 34 kann im Einstiegsbereich 4 des Passagierfahrzeugs 26 an der weiteren Seitenfläche 32 angeordnet sein (nicht sichtbar). Der weitere erste Infrarotheizstrahler 34 kann in seinem aktivierten Zustand einen Teil der Trittfläche 16 der Stufe 30 mit Infrarotstrahlung 22 bestrahlen.

Außerdem weist das Passagierfahrzeug 26 zwei zweite Infrarotheizstrahler 36 auf, die jeweils an einer Innenseite 38 der Tür 12 angeordnet sind. Dabei ist jeder zweite Infrarotheizstrahler 36 jeweils an einem Flügel 28 der Tür 12 angebracht.

Prinzipiell könnte anstatt der beiden zweiten Infrarotheizstrahler 36 auch nur ein einziger zweiter Infrarotheizstrahler 36 an der Innenseite 38 der Tür 12 angeordnet sein, insbesondere im Falle einer einflügligen Tür 12.

Die beiden zweiten Infrarotheizstrahler 36 sind im unteren Bereich der Tür 12 angeordnet/angebracht.

Jeder der zweiten Infrarotheizstrahler 36 bestrahlt in seinem aktivierten Zustand einen Teil der Trittfläche 16 der Stufe 30 mit Infrarotstrahlung 22.

Auf diese Weise erwärmt die von den zweiten Infrarotheizstrahlern 36 ausgestrahlte Infrarotstrahlung 22 jeweils den bestrahlten Teil der Stufe 30.

Die Infrarotheizstrahler 34, 36 sind jeweils flächig, d. h. als Flächenstrahler, ausgebildet.

Prinzipiell könnte das Passagierfahrzeug 26 anstatt der einen einzigen Stufe 30 auch mehrere Stufen aufweisen, beispielsweise in ähnlicher Weise wie in FIG 1. In diesem Fall würde der erste Infrarotheizstrahler 34 in seinem aktivierten Zustand einen Teil der jeweiligen Trittfläche 16 der mehreren Stufen mit Infrarotstrahlung 22 bestrahlen. Weiter würde in diesem Fall jeder der zweiten Infrarotheizstrahler 36 in ihrem jeweiligen aktivierten Zustand jeweils einen Teil der Trittfläche 16 der mehreren Stufen mit Infrarotstrahlung 22 bestrahlen.

## Patentansprüche

1. Passagierfahrzeug (2, 26) mit einem Einstiegsbereich (4) für Passagiere, wobei der Einstiegsbereich (4) zumindest eine Stufe (6, 8, 10, 30) aufweist, und
einem Infrarotheizstrahler (20, 24, 34, 36), welcher im Einstiegsbereich (4) des Passagierfahrzeugs (2, 26) derart angeordnet ist, dass der Infrarotheizstrahler (20, 24, 34, 36) in seinem aktivierten Zustand zumindest einen Teil der zumindest einen Stufe (6, 8, 10, 30) mit Infrarotstrahlung (22) bestrahlt
**dadurch gekennzeichnet, dass**
der Einstiegsbereich (4) zumindest eine erste Stufe (6, 8) und eine zweite Stufe (8, 10) umfasst, wobei die erste Stufe (6, 8) unterhalb der zweiten Stufe (8, 10) angeordnet ist, wobei die zweite Stufe (8, 10) eine Trittfläche (16) und eine zur Trittfläche (16) winklig angeordnete Steigfläche (18) aufweist,
wobei der Infrarotheizstrahler (20, 24) an der Steigfläche (18) der zweiten Stufe (8, 10) angeordnet ist.

2. Passagierfahrzeug (2, 26) nach Anspruch 1,
**dadurch gekennzeichnet, dass**
der Infrarotheizstrahler (20, 24, 34, 36) flächig ausgebildet ist.

3. Passagierfahrzeug (2) nach einem der vorhergehenden Ansprüche, ausgebildet als Schienenfahrzeug.

4. Passagierfahrzeug (26) nach einem der vorhergehenden Ansprüche, ausgebildet als Bus.

## Claims

1. Passenger vehicle (2, 26) with an entry region (4) for passengers, the entry region (4) having at least one step (6, 8, 10, 30), and
an infrared radiant heater (20, 24, 34, 36) which is arranged in the entry region (4) of the passenger vehicle (2, 26) in such a manner that the infrared radiant heater (20, 24, 34, 36) in its activated state irradiates at least part of the at least one step (6, 8, 10, 30) with infrared radiation (22), **characterized in that**
the entry region (4) comprises at least one first step (6, 8) and a second step (8, 10), the first step (6, 8) being arranged below the second step (8, 10),
the second step (8, 10) having a tread surface (16) and a rising surface (18) arranged at an angle to the tread surface (16),
the infrared radiant heater (20, 24) being arranged on the rising surface (18) of the second step (8, 10).

2. Passenger vehicle (2, 26) according to Claim 1, **characterized in that**
the infrared radiant heater (20, 24, 34, 36) is of flat design.

3. Passenger vehicle (2) according to either of the preceding claims, configured in the form of a rail vehicle.

4. Passenger vehicle (26) according to either of the preceding claims, configured in the form of a bus.

## Revendications

1. Véhicule (2, 26) de transport de passagers comprenant une partie (4) de montée des passagers, dans lequel la partie (4) de montée à au moins une marche (6, 8, 10, 30), et
un radiateur (20, 24, 34, 36) de chauffage infrarouge, qui est disposé dans la partie (4) d'entrée du véhicule (2, 26) de transport de passagers, de manière à ce que le radiateur (20, 24, 34, 36) de chauffage infrarouge expose, dans son état activé, au moins une partie de la au moins une marche (6, 8, 10, 30) au rayonnement (22) infrarouge,
**caractérisé en ce que**
la partie (4) de montée comprend au moins une première marche (6, 8) et une deuxième marche (8, 10), dans lequel la première marche (6, 8) est disposée en dessous de la deuxième marche (8, 10), dans lequel la deuxième marche (8, 10) a un marchepied (16) et une contremarche (18) disposée en faisant un angle avec le marchepied (16),
dans lequel le radiateur (20, 24) de chauffage infrarouge est disposé sur la contremarche (18) de la deuxième marche (8, 10).

2. Véhicule (2, 26) de transport de passagers suivant la revendication 1,
**caractérisé en ce que**
le radiateur (20, 24, 34, 36) de chauffage infrarouge est de constitution plate.

3. Véhicule (2) de transport de passagers suivant l'une des revendications précédentes constitué en véhicule ferroviaire.

4. Véhicule (26) de transport de passagers suivant l'une des revendications précédentes constitué en autobus.
